# EUROPEAN PATENT SPECIFICATION

(11) **EP 0 397 348 B1**
(45) Date of publication and mention of the grant of the patent: **02.08.1995**
(21) Application number: 90304408.9
(22) Date of filing: 25.04.1990
(51) Int. Cl.: G06K 15/02, B41B 19/01

(54) **Dot pattern signal generator**
Punktmustersignal-Generator
Générateur de signaux de prints d'image

(30) Priority: 10.05.1989 JP 118095/89
(43) Date of publication of application: 14.11.1990
(73) Proprietor: SEIKO EPSON CORPORATION, Shinjuku-ku Tokyo (JP)
(72) Inventor: Kajimoto, Kazuhiro, c/o SEIKO EPSON CORPORATION, Suwa-shi, Nagano-ken (JP)
(74) Representative: Sturt, Clifford Mark

(56) References cited:
- EP-A- 0 215 664
- WO-A-86/01154
- IEEE TRANSACTIONS ON PATTERN ANALYSIS AND MACHINE INTELLIGENCE, vol. PAMI-4,no. 3, May 1982, pages 331-335, IEEE, New York, US; R.A. ULICHNEY et al.:"Scaling binary images with the telescoping template"

## Description

The present invention relates to a pattern signal generator for storing as outline data pattern data for characters, for example, and for generating dot patterns from such outline data.

With improvements in grade in the printing output of word processors, etc. the number of dots forming a character pattern has significantly increased and, therefore, the problem arises that a memory capacity of a character generator storing the character pattern as dot pattern data has to be increased.

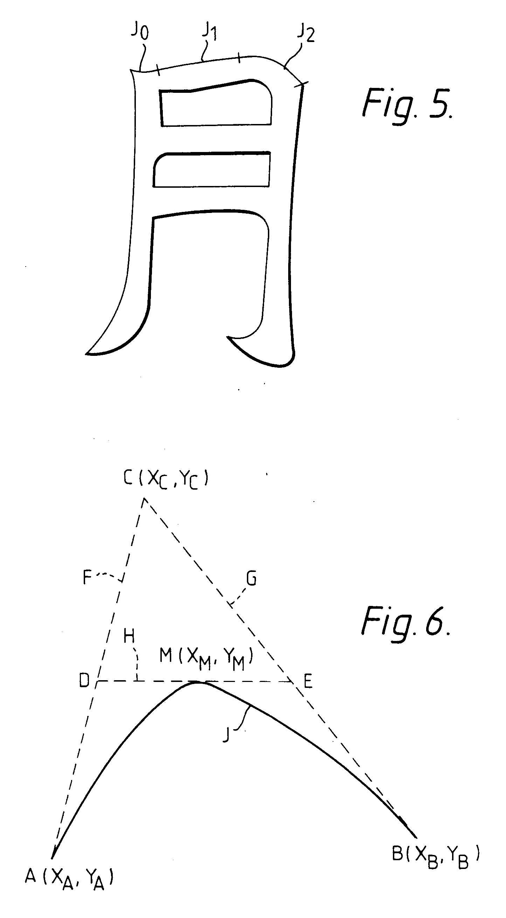

In a proposed method for solving such a problem, the outline of the character pattern is divided into a plurality of segments J₀, J₁, J₂ (see Figure 5), the co-ordinates of the starting point and ending point of each of these segments J₀, J₁, J₂ ... are stored as the outline data, and these co-ordinates are converted into dot pattern data for providing a display or printed output.

A conic spline curve J (see Figure 6) obtained as an approximation of the segment J₂ forming a part of the outline of the character pattern has the property that, if the tangents F, G are drawn from the starting point A and the ending point B and the intersection of the tangents F, G is assumed as the control point C, the line H connecting the intermediate points D, E of the tangents F and G in relation to the control point C, the starting point A and the ending point B is in contact at its intermediate point M with the conic spline curve J. Therefore, the outline can be reproduced by storing the co-ordinates (X_{A}, Y_{A}), (X_{B}, Y_{B}) and (X_{C}, Y_{C}) or (X_{M}, Y_{M}) respectively of the starting point A, the ending point B, the control point C or the intermediate point M as the data indicating the outline.

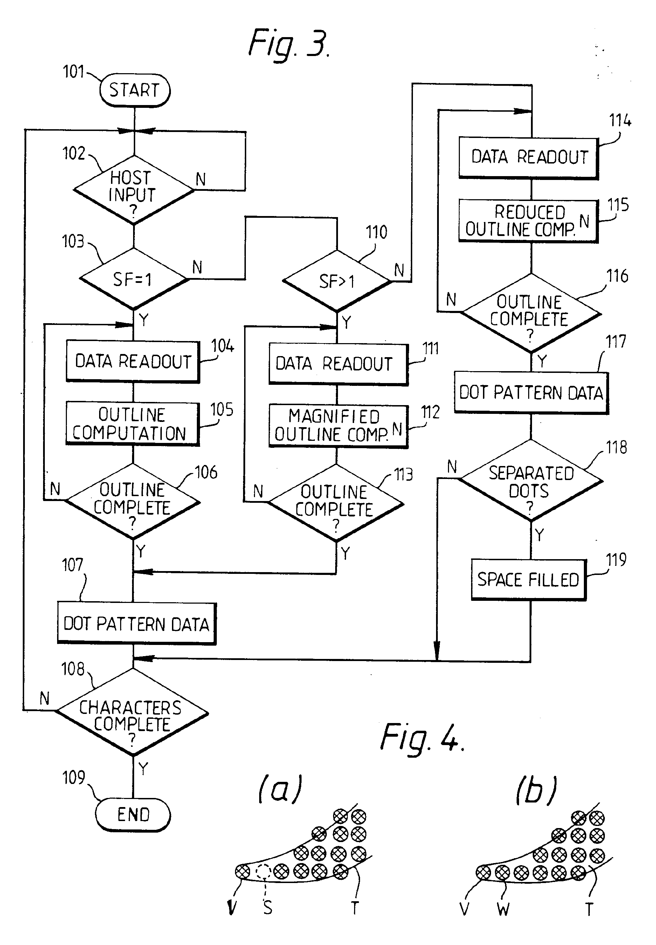

Accordingly, expansion and reduction of character size can be realised and character quality can be improved, whilst reducing the quantity of data to be stored. However a problem still arises in that if a character pattern of a standard size as stored is reduced, the quality of the reduced character may be diminished because of certain dots V being separated by a space S from the character body T, particularly generated at an area where a "skipping part" exists (see Figure 4 (a)).

WO-A-86/01154 discloses a process and apparatus for decoding characters and graphic elements using polynomials calculated with spline functions.

EP-A-0-215 664 describes a method and apparatus for creating and storing characters for display on a video screen. The shape of the graphic character is displayed at various degrees of resolution. The characters are stored as coefficients of spline curves which can be scaled up or down to give different character sizes.

The present invention seeks to provide a dot pattern signal generator in which the generation of separated dots, for example in reduced characters, is prevented.

According to a first aspect of the present invention, there is provided a dot pattern signal generator comprising an outline data memory for storing data representing an outline of pattern, outline reproducing means responsive to an external signal for selectively reading out the stored data and for calculating outline data on the basis of the read out data, dot pattern generating means for supplying dot pattern data according to the calculated outline data, and dot pattern compensating means comprising:
means for detecting a dot or cluster of dots isolated from the main body of the dot pattern;
means for determining whether the number of dots comprising the dot or isolated dot cluster is less than the minimum number of dots required to comprise a character element scaled according to the reduction factor; and
means for filling in the missing dots in the region between the isolated dot or cluster of dots with dots (W) when the number of dots in the cluster is less than the said minimum number.

In a second aspect of the present invention there is provided a dot pattern signal generator comprising an outline data memory for storing data representing an outline of pattern, outline reproducing means responsive to an external signal for selectively reading out the stored data and for calculating outline data on the basis of the read out data, dot pattern generating means for supplying dot pattern data according to the calculated outline data, and dot pattern compensating means comprising means for detecting a dot or cluster of dots isolated from the main body of the dot pattern;
means for determining whether the number of dots comprising the dot or isolated dot cluster is less than the minimum number of dots required to comprise a character element scaled according to the reduction factor; and
means for removing the isolated dot or cluster of dots when the number of dots in the cluster is less than the said minimum number.

In a third aspect of the present invention there is provided;
a method for generating a signal corresponding to a character code having an outline formed as a plurality of dots forming a body of said outline comprising the steps of:
storing character code data corresponding to an outline of standard size;
receiving a reduction signal and said stored character code data and calculating character outline data in response thereto;
converting said character outline data into dot pattern data characterised by detecting whether a dot or cluster of said dot pattern data are isolated from a main body of said character outline;
determining whether the number of dots comprising the dot or isolated dot cluster is less than the minimum number of dots required to comprise a character element scaled according to the reduction factor; and
filling in the region between the isolated dot or cluster of dots with dots (W) when the number of dots in the cluster is less than the said minimum number.

In a fourth aspect of the present invention there is provided:
a method for generating a signal corresponding to a character code having an outline formed as a plurality of dots forming a body of said outline compromising the steps of:
storing character code data corresponding to an outline of standard size;
receiving a reduction signal and said stored character code data and calculating character outline data in response thereto;
converting said character outline data into dot pattern data characterised by detecting whether dot or cluster of dots of said dot pattern data are isolated from a main body of said character outline;
determining whether the number of dots comprising the dot or isolated dot cluster is less than the minimum number of dots required to comprise a character element scaled according to the reduction factor; and
removing the isolated dot or cluster of dots when the number of dots in the cluster is less than the said minimum number.

The present invention is described further, by way of example, with reference to the accompanying drawings, in which:-
Figure 1 is a block diagram showing an embodiment of pattern signal generator according to the present invention;
Figure 2 is a diagram showing a data format in an outline data circuit of the pattern signal generator of Figure 1;
Figure 3 is a flow chart representing the operation of the pattern signal generator of Figure 1;
Figures 4 (a) and 4 (b) show dot patterns generated respectively in the previously proposed method and in the pattern signal generator of Figure 1; and
Figures 5 and 6 are diagrams for assistance in explaining how an outline font is generated in the pattern signal generator of Figure 1.

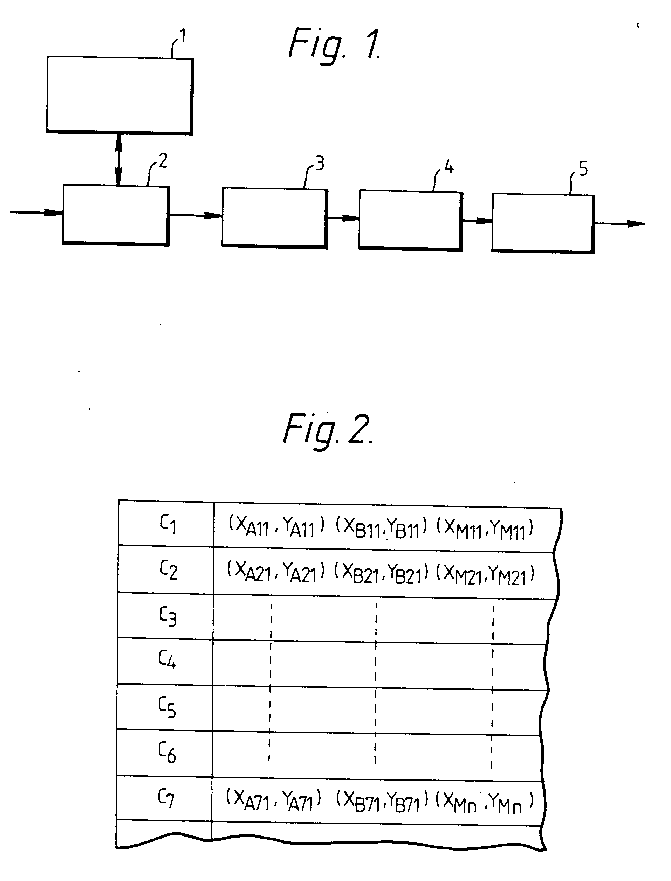

Figure 1 is a block diagram of an embodiment of the present invention comprising an outline data memory circuit 1, in which: a character code is divided into a plurality of addresses C₁ ... Cₙ; an outline for a character of a standard size is separated into a plurality of segments J₀, J₁, J₂ as indicated in Figure 5; and the co-ordinates of a starting point (X_{A}, Y_{A}), an ending point (X_{B}, Y_{B}) and a control point (X_{C}, Y_{C}) or an auxiliary point (X_{M}, Y_{M}) of the respective conic spline curve approximating each of the segments J₀, J₁, J₂ are stored as data. In the case of a continuous outline, only the co-ordinates of the ending point and the auxiliary point may be stored because the co-ordinates of the starting point for each succeeding segment are the same as for the ending point of the preceding segment.

As further shown in Figure 1, an outline data calculation circuit 3 converts the co-ordinates of the starting point, the ending point, the control point or the auxiliary point read out from the memory circuit 1 by a read out circuit 2 so that the co-ordinates match a designated character size.

A dot pattern generating circuit 4 receives outline data sent from the outline calculation circuit 3 and generates dot pattern data accordingly.

A dot pattern compensating circuit 5 receives the dot pattern data from the circuit 4 and, when a gathering or cluster of dots fewer than a constant number of dots, for example two dots, among the dot pattern data generated by the dot pattern generating circuit 4 is detected, assumes that a space or separation S exists between such gathering of dots and a character body T and supplies dots W to connect the character body and the gathering.

Next, the operation of the dot pattern generator of Figure 1 will be explained with reference to the flow chart of Figure 3.

Following the start of operation (step 101), character data is supplied from a host unit (not shown) in step 102. The data is reviewed in step 103 to establish whether it contains a character signal representing a scale factor of 1 (standard size).

### [Standard size]

In the case of a character signal output from the host unit designating the standard size, the outline data calculation circuit 3 calculates the outline data of segments and curves forming the outline of a character from the co-ordinates of the starting point, ending point and auxiliary or control point read out from the outline data memory circuit 1 and the conic spline function (steps 104 and 105). When the formation of the outline of a character is completed (step 106), the dot pattern generating circuit 4 generates a dot signal for filling in the region surrounded by the outline, converts such a signal to a dot pattern signal and then outputs this signal to an external device (step 107).

### [Magnified size]

In the case of a character signal output from a host unit designating a size larger than the standard size (step 110), the outline data calculation circuit 3 converts the co-ordinates of the starting point, ending point and auxiliary or control point read from the outline data memory circuit 1 into co-ordinates corresponding to the designated magnified size and calculates the outline data from these converted co-ordinates and the conic spline function (steps 112 and 113). The dot pattern generating circuit 4 generates a dot signal for filling in the region surrounded by the outline and then converts it to a dot pattern signal (steps 113 and 107).

### [Reduced size]

In the case of a character signal output from a host unit designating a character size smaller than the standard size, the outline data calculation circuit 3 converts the co-ordinates of the starting point, ending point and auxiliary or control point read from the outline data memory circuit 1 into co-ordinates corresponding to the designated reduced size and calculates the outline data corresponding to the reduction factor from these converted co-ordinates and the conic spline function (steps 114 and 115).

The dot pattern generating circuit 4 generates a dot signal for filling in the region surrounded by the outline to generate the dot pattern data (steps 116 and 117).

In some cases, this dot pattern data represents a dot pattern in which dots V separated by the space S from the character body T are generated at a part, particularly at a "skipping part", of the character (as shown in Figure 4 (a)) to be formed intrinsically as continuous dots.

The dot pattern compensating circuit 5 receives the dot pattern data from the dot pattern generating circuit 4 and decides whether there exist dots in such a number as is smaller than a minimum value determined according to the reduction factor for establishing whether a gathering of the dots represent, for example, an element such as a comma "," or not. When there exists such dots in numbers less than the minimum value, the dot pattern compensating circuit 5 considers such dots to be separated dots, (step 118). In a case where there are such separated dots, dots W are supplied by the dot pattern compensating circuit 5 to the space S on a line connecting the separated dots and character body in the shortest distance (step 119). Thereby, the separated dots V generated in the dot pattern generating circuit 4 can be integrated with the character body T by the dots W supplied to the space S (as shown in Figure 4 (b)).

In this embodiment, the separated dots and the character body are connected by extra dots supplied, but in the case where a character size is particularly small, sufficient character quality for practical use may be maintained by eliminating the separated dots instead.

As described above, the present invention comprises the outline data memory means 1 for storing outline data for a character pattern of standard size, the read out means 2 for reading the data in response to an external reading signal, the outline data calculation means 3 for calculating outline data corresponding to a magnification factor based on the stored data and external magnification factor data, the dot pattern generating means 4 for outputting dot pattern data based on the outline data sent from the calculation means 3, and the dot pattern compensating means 5 for detecting from the dot pattern data the existence of separated dots when a regulated number of dots or less are present and for giving dots to the space in the case where such separation is smaller than a standard value.

Therefore, a high quality character dot pattern can be provided by reliably preventing the production of separated dots, which may be generated easily during the formation of the dot patterns for reduced characters.

## Claims

1. A dot pattern signal generator comprising an outline data memory (1) for storing data representing an outline of pattern, outline reproducing means (2, 3) responsive to an external signal for selectively reading out the stored data and for calculating outline data on the basis of the read out data, dot pattern generating means (4) for supplying dot pattern data according to the calculated outline data, and characterised by dot pattern compensating means (5) comprising:
means for detecting a dot or cluster of dots isolated from the main body of the dot pattern;
means for determining whether the number of dots comprising the dot or isolated dot cluster is less than the minimum number of dots required to comprise a character element scaled according to the reduction factor; and
means for filling in the missing dots in the region between the isolated dot or cluster of dots with dots (W) when the number of dots in the cluster is less than the said minimum number.

2. A dot pattern signal generator comprising an outline data memory (1) for storing data representing an outline of pattern, outline reproducing means (2, 3) responsive to an external signal for selectively reading out the stored data and for calculating outline data on the basis of the read out data, dot pattern generating means (4) for supplying dot pattern data according to the calculated outline data, and characterised by dot pattern compensating means (5) comprising:
means for detecting a dot or cluster of dots isolated from the main body of the dot pattern;
means for determining whether the number of dots comprising the dot or isolated dot cluster is less than the minimum number of dots required to comprise a character element scaled according to the reduction factor; and means for removing the isolated dot or cluster of dots when the number of dots in the cluster is less than the said minimum number.

3. A dot pattern signal generator according to any of claims 1 to 2 characterised in that the data stored in the outline memory represents a pattern of a standard size, and in that the dot pattern compensating means are arranged to be operative when the calculated outline data represents a pattern of a reduced size.

4. A method for generating a signal corresponding to a character code having an outline formed as a plurality of dots forming a body of said outline comprising the steps of:
storing character code data corresponding to an outline of standard size;
receiving a reduction signal and said stored character code data and
calculating character outline data in response thereto;
converting said character outline data into dot pattern data characterised by detecting whether a dot or cluster of dots of said dot pattern data are isolated from a main body of said character outline;
determining whether the number of dots comprising the dot or isolated dot cluster is less than the minimum number of dots required to comprise a character element scaled according to the reduction factor; and
filling in the region betwen the isolated dot or cluster of dots with dots (W) when the number of dots in the cluster is less than the said minimum number.

5. A method for generating a signal corresponding to a character code having an outline formed as a plurality of dots forming a body of said outline comprising the steps of:
storing character code data corresponding to an outline of standard size;
receiving a reduction signal and said stored character code data and calculating character outline data in response thereto;
converting said character outline data into dot pattern data characterised by detecting whether dot or cluster of dots of said dot pattern data are isolated from a main body of said character outline;
determining whether the number of dots comprising the dot or isolated dot cluster is less than the minimum number of dots required to comprise a character element scaled according to the reduction factor; and
removing the isolated dot or cluster of dots when the number of dots in the cluster is less than the said minimum number.

## Patentansprüche

1. Punktmustersignalgenerator umfassend einen Umrißdatenspeicher (1) zum Speichern von einen Umriß eines Musters darstellenden Daten, auf ein externes Signal ansprechende Umrißwiedergabemittel (2, 3) zum wahlweisen Auslesen der gespeicherten Daten und zum Berechnen von Umrißdaten auf Basis der ausgelesenen Daten, Punktmustererzeugungsmittel (4) zum Liefern von Punktmusterdaten gemäß den berechneten Umrißdaten, gekennzeichnet durch Punktmusterkompensationsmittel (5) umfassend:
Mittel zum Erfassen eines Punkts oder eines Punkteclusters, welcher von dem Hauptkörper des Punktmusters getrennt ist;
Mittel zum Bestimmen, ob die Anzahl der den Punkt oder isolierten Punktecluster bildenden Punkte kleiner als die Minimalanzahl von Punkten ist, welche für ein gemäß dem Verkleinerungsfaktor skaliertes Zeichenelement erforderlich ist; und
Mittel zum Auffüllen der fehlenden Punkte im Bereich zwischen dem isolierten Punkt oder Punktecluster mit Punkten (W), wenn die Anzahl von Punkten in dem Cluster kleiner als die Minimalanzahl ist.

2. Punktmustersignalgenerator umfassend einen Umrißdatenspeicher (1) zum Speichern von einen Umriß eines Musters darstellenden Daten, auf ein externes Signal ansprechende Umrißwiedergabemittel (2, 3) zum wahlweisen Auslesen der gespeicherten Daten und zum Berechnen von Umrißdaten auf Basis der ausgelesenen Daten, Punktmustererzeugungsmittel (4) zum Liefern von Punktmusterdaten gemäß den berechneten Umrißdaten, gekennzeichnet durch Punktmusterkompensationsmittel (5) umfassend:
Mittel zum Erfassen eines Punkts oder eines Punkteclusters, welcher von dem Hauptkörper des Punktmusters getrennt ist;
Mittel zum Bestimmen, ob die Anzahl der den Punkt oder isolierten Punktecluster bildenden Punkte kleiner als die Minimalanzahl von Punkten ist, welche für ein gemäß dem Verkleinerungsfaktor skaliertes Zeichenelement erforderlich ist; und Mittel zum Entfernen des isolierten Punkts oder Punkteclusters, wenn die Anzahl von Punkten in dem Cluster kleiner als die Minimalanzahl ist.

3. Punktmustersignalgenerator nach einem der Ansprüche 1 bis 2, dadurch gekennzeichnet, daß die in dem Umrißspeicher gespeicherten Daten ein Muster mit Standardgröße darstellen und daß die Punktmusterkompensationsmittel dazu eingerichtet sind, betriebswirksam zu sein, wenn die berechneten Umrißdaten ein Muster verkleinerter Größe darstellen.

4. Verfahren zum Erzeugen eines Signals, welches einem Zeichencode mit einem Umriß entspricht, welcher als eine Mehrzahl von einen Körper dieses Umrisses bildenden Punkten gebildet ist,
umfassend die Schritte:
Speichern von Zeichencodedaten, welche einem Umriß mit Standardgröße entsprechen;
Empfangen eines Verkleinerungssignals und der gespeicherten Zeichencodedaten und Berechnen von Zeichenumrißdaten in Antwort darauf;
Umwandeln der Zeichenumrißdaten in Punktmusterdaten, gekennzeichnet durch
Erfassen, ob ein Punkt oder Punktecluster der Punktmusterdaten von einem Hauptkörper dieses Zeichenumrisses isoliert ist;
Bestimmen, ob die Anzahl der den Punkt oder isolierten Punktecluster bildenden Punkte kleiner als die Minimalanzahl von Punkten ist, welche für ein gemäß dem Verkleinerungsfaktor skaliertes Zeichenelement erforderlich ist; und
Auffüllen des Bereichs zwischen dem isolierten Punkt oder Punktecluster mit Punkten (W), wenn die Anzahl von Punkten in dem Cluster kleiner als die Minimalanzahl ist.

5. Verfahren zum Erzeugen eines Signals, welches einem Zeichencode mit einem Umriß entspricht, welcher als eine Mehrzahl von einen Körper dieses Umrisses bildenden Punkten gebildet ist,
umfassend die Schritte:
Speichern von Zeichencodedaten, welche einem Umriß mit Standardgröße entsprechen;
Empfangen eines Verkleinerungssignals und der gespeicherten Zeichencodedaten und Berechnen von Zeichenumrißdaten in Antwort darauf;
Umwandeln der Zeichenumrißdaten in Punktmusterdaten, gekennzeichnet durch
Erfassen, ob ein Punkt oder Punktecluster der Punktmusterdaten von einem Hauptkörper dieses Zeichenumrisses isoliert ist;
Bestimmen, ob die Anzahl der den Punkt oder isolierten Punktecluster bildenden Punkte kleiner als die Minimalanzahl von Punkten ist, welche für ein gemäß dem Verkleinerungsfaktor skaliertes Zeichenelement erforderlich ist; und
Entfernen des isolierten Punkts oder Punkteclusters, wenn die Anzahl von Punkten in dem Cluster kleiner als die Minimalanzahl ist.

## Revendications

1. Générateur de signaux de print d'image comprenant une mémoire (1) de données de contour destinée à mémoriser des données représentant le contour d'une image, des moyens (2, 3) de reproduction de contour actifs en réponse à un signal externe pour lire sélectivement les données mémorisées et pour calculer des données de contour sur la base des données lues, des moyens (4) de production de print d'image pour fournir des données de print d'image conformément aux données de contour calculées, et des moyens (5) de compensation de print d'image comprenant des moyens pour détecter un point ou un amas de points isolé du corps principal du print d'image ;
des moyens pour déterminer si le nombre de points comprenant le point ou l'amas de points isolé est inférieur au nombre minimum de points requis pour comprendre un élément de caractère modifié selon le facteur de réduction ; et
des moyens pour remplir les points manquants dans la région entre le point ou l'amas de points isolé avec des points (W) lorsque le nombre de points dans l'amas est inférieur audit nombre minimum.

2. Générateur de signaux de print d'image comprenant une mémoire (1) de données de contour destinée à mémoriser des données représentant le contour d'une image, des moyens (2, 3) de reproduction de contour actifs en réponse à un signal externe pour lire sélectivement les données mémorisées et pour calculer des données de contour sur la base des données lues, des moyens (4) de production de print d'image pour fournir des données de print d'image conformément aux données de contour calculées, et des moyens (5) de compensation de print d'image comprenant des moyens pour détecter un point ou un amas de points isolé du corps principal du print d'image ;
des moyens pour déterminer si le nombre de points comprenant le point ou l'amas de points isolé est inférieur au nombre minimum de points requis pour comprendre un élément de caractère modifié selon le facteur de réduction ; et
des moyens pour éliminer le point isolé ou l'amas de points isolés lorsque le nombre de points dans l'amas est inférieur audit nombre minimum.

3. Générateur de signaux de print d'image selon l'une quelconque des revendications 1 à 2, caractérisé en ce que les données mémorisées dans la mémoire de contour représentent une figure d'une taille standard, et en ce que les moyens de compensation de print d'image sont agencés pour être actifs lorsque les données de contour calculées représentent une figure de taille réduite.

4. Procédé pour générer un signal correspondant à un code de caractère ayant un contour formé par une pluralité de points formant un corps dudit contour, comprenant les étapes consistant à :
mémoriser des données de code de caractère correspondant à un contour de taille standard ;
recevoir un signal de réduction et lesdites données de code de caractère mémorisées et calculer des données de contour de caractère en réponse à ceux-ci ;
convertir lesdites données de contour de caractère en des données de print d'image, caractérisé par le fait de détecter si un point ou un amas desdites données de print d'image est isolé d'un corps principal dudit contour de caractère ;
déterminer si le nombre de points comprenant le point ou l'amas de points isolé est inférieur au nombre minimum de points requis pour comprendre un élément de caractère modifié selon le facteur de réduction ; et
remplir la région entre le point ou l'amas de points isolé avec des points (W) lorsque le nombre de points dans l'amas est inférieur audit nombre minimum.

5. Procédé pour générer un signal correspondant à un code de caractère ayant un contour formé par une pluralité de points formant un corps dudit contour, comprenant les étapes consistant à :
mémoriser des données de code de caractère correspondant à un contour de taille standard ;
recevoir un signal de réduction et lesdites données de code de caractère mémorisées et calculer des données de contour de caractère en réponse à ceux-ci ;
convertir lesdites données de contour de caractère en des données de print d'image, caractérisé par le fait de détecter si un point ou un amas de points desdites données de print d'image est isolé d'un corps principal dudit contour de caractère ;
déterminer si le nombre de points comprenant le point ou l'amas de points isolé est inférieur au nombre minimum de points requis pour comprendre un élément de caractère modifié selon le facteur de réduction ; et
éliminer le point isolé ou l'amas de points isolés lorsque le nombre de points dans l'amas est inférieur audit nombre minimum.
